# EUROPÄISCHE PATENTSCHRIFT

(11) **EP 1 819 583 B1**
(45) Veröffentlichungstag und Bekanntmachung des Hinweises auf die Patenterteilung: **12.11.2008**
(21) Anmeldenummer: 05784722.0
(22) Anmeldetag: 14.09.2005
(51) Int. Cl.: B62K 25/28

(54) **DÄMPFUNGSSYSTEM FÜR EIN FAHRRAD**
SHOCK ABSORBER SYSTEM FOR A BICYCLE
SYSTEME D'AMORTISSEMENT POUR UNE BICYCLETTE

(30) Priorität: 08.12.2004 DE 102004059187
(43) Veröffentlichungstag der Anmeldung: 22.08.2007
(73) Patentinhaber: Felt GmbH, 26188 Edewecht (DE)
(72) Erfinder: SOUCEK, Jeffrey Adelbert, Aliso Viejo, CA 92656 (US)
(74) Vertreter: Wallinger, Michael
(86) Internationale Anmeldenummer: PCT/EP2005/009899
(87) Internationale Veröffentlichungsnummer: WO 2006/061052

(56) Entgegenhaltungen:
- DE-U1- 20 209 190
- FR-A- 2 776 981
- US-A- 1 047 430
- US-A- 6 161 858
- US-A1- 2001 024 024
- US-A1- 2003 038 450
- US-A1- 2004 094 933
- US-A1- 2004 145 149

## Beschreibung

Die vorliegende Erfindung bezieht sich auf ein Fahrrad mit einem Dämpfungssystem.

Aus dem Stand der Technik sind Fahrräder bekannt, welche Dämpfungsmechanismen für das Vorderrad und das Hinterrad aufweise, um dem Benutzer das Fahren über unwegsames Gelände zu erleichtern.

So sind aus dem Stand der Technik Fahrräder bekannt, welche einen Rahmen aufweisen, der in zwei Teilrahmen unterteilt ist, wobei die Teilrahmen bezüglich einander drehbar angeordnet sind. Dabei ist ein Schwenkpunkt des hinteren Rahmenteils, welches das Hinterrad trägt, und des vorderen Rahmenteils, welcher das Vorderrad trägt, oberhalb der Kette vorgesehen, wobei die Kettenspannung für einen Anfahmickausgleich sorgt. Unter einem Nicken wird in diesem Zusammenhang verstanden, dass beim Anfahren zunächst eine Belastung der Dämpfungseinrichtung erzeugt wird, bevor die Tretenergie in Fahrtenergie umgesetzt wird und auf diese Weise die Tretenergie zumindest auch eine Bewegung des Rahmenteile bezüglich einander sowie eine Belastung des Dämpfers bewirkt.

Eine entscheidende Größe ist der Abstand des Schwenkpunkts zu der Kette. Bei einigen Systemen nach dem Stand der Technik tritt das Problem auf, dass sich beim Schalten von Gängen der Abstand zwischen dem Schwenkpunkt und der Kette ändert und damit auch die Charakteristik des Anfahrnickausgleichs.

Eine derartige Änderung der Charakteristik tritt auch auf, wenn die Federung zusammengedrückt wird, da sich auch in diesem Fall der Abstand des Schwenkpunktes zu der Kette ändert. Ferner tritt, wenn die Federung zusammengedrückt wird, eine Änderung des Abstandes zwischen dem Hinterrad und dem Tretlager auf, was dazu führt, dass ein sogenannter Pedalrückschlag auftritt. Dieser Pedalrückschlag entsteht, weil sich beim Einfedern des Hinterbaus der Abstand zwischen dem vorderen und dem hinteren Ritzel verlängert. Infolge dessen dreht sich die Kurbel rückwärts. Wie stark dies geschieht, ist von der Konstruktion abhängig, aber auch von der gewählten Übersetzung. Ein dabei insbesondere auftretender störender Effekt ist, dass häufig die Kette um ein Kettenblatt nach unten fällt (insbesondere beim Downhill-Fahren) und sich dabei verklemmen kann.

Eine weitere Rahmenkonstruktion nach dem Stand der Technik sind Federungsauslegungen, welche eine Vierstangen-Verbindung aufweisen, welche die Kettenkräfte von den durch Straßenunregelmäßigkeiten hervorgerufenen Kräften trennen. Dabei ist der Bewegungspfad des Hinterrades senkrecht zur Kette, genauer fast vertikal, bewegt sich aber auf den Fahrer während Kompression der Dämpfungseinrichtung zu, während der Winkel mit der Kette seine Richtung ändert.

Bei diesen Ausführungsformen wirken die Übertragungskräfte vertikal, das heißt in der gleichen Richtung, in der sich die Federung bewegt. Dies führt dazu, dass diese Ausführungsformen sehr sensibel in bezug auf Gewichtskräfte sind. Um diese Probleme zu vermeiden, passen die Benutzer typischerweise ihren Tretmodus an, um allzu schnelle Beschleunigung zu vermeiden. Auch dies ist nicht wünschenswert.

Beim Wechsel von Gängen ändert sich bei diesen Ausführungsformen, wie dargestellt, der Winkel der Kette. Dagegen kann sich der Pfad, auf dem sich das Hinterrad bewegt, nicht ändern, da er durch die Verbindung festgelegt wird. Daher ändern sich die Charakteristika des Anfahrnickausgleichs in Abhängigkeit von der gewählten Gangstufe.

Ferner sind aus dem Stand der Technik sogenannte VPP-Anordnungen (= virtual pivot point) bekannt. Bei dieser Konstruktion wird versucht, Antriebseinflüsse des Fahrradfahrers vom Dämpferelement zu entkoppeln. Diese Konstruktionen nähern sich wieder solchen Konstruktionen mit nur einem Schwenkpunkt an. Bei diesen Anordnungen tritt das Problem auf, dass, wenn die Dämpfung über einen Punkt, an dem der Bewegungspfad des Rades senkrecht zum Kettenwinkel steht, hinausgeht, die Kettenspannung das Hinterrad abwärts zieht. Umgekehrt wird das Hinterrad oberhalb des genannten Punktes, das heißt, wenn der Dämpfer über diesen Punkt ausgestreckt ist, nach oben gezogen. Durch dieses Auf- und Niederziehen des Hinterrads wird eine unerwünschte Bewegung des Hinterrads bewirkt, die nur durch eine überhöhte Dämpfung des Dämpfers verhindert werden kann. Ferner ist der Betrieb des Systems von Änderungen der Kettenlänge abhängig, so dass auch hier ein Pedalrückschlag auftreten kann.

Aus der DE 202 09 190 U1 ist ein Fahrrad nach dem Oberbegriff des Anspruchs 1 bekannt, bei dem ein hinteres Rahmenelement einerseits über eine drehbewegliche Verbindungseinrichtung und andererseits über einen Schwingenlagerdrehpunkt der sichelartigen Konstruktion der Schwingenarme des hinteren Rahmenelementes mit einem vorderen Rahmenelements in Form eines herkömmlichen Diamantrahmens verbunden ist. Die erste Verbindungseinrichtung ist weiterhin über eine Dämpfungseinrichtung mit der Hinterradschwinge gekoppelt.

Der vorliegenden Erfindung liegt daher die Aufgabe zugrunde, Anfahrnickausgleiche mit im wesentlichen konstanten Charakteristika zur Verfügung zu stellen. Eine weitere Aufgabe der Erfindung liegt darin, den im Stand der Technik auftretenden Pedalrückschlag zu vermeiden oder zumindest zu verringern.

Dies wird erfindungsgemäß durch ein Fahrrad nach Anspruch 1 erreicht. Vorteilhafte Ausführungsformen und Weiterbildungen sind Gegenstand der Unteransprüche.

Das erfindungsgemäße Fahrrad weist einen Rahmen mit wenigstens einem vorderen und einem hinteren Rahmenelement auf. Dabei weist das vordere Rahmenelement wenigstens eine vordere Fahrradaufhängung und wenigstens ein Tretlager auf und das hintere Rahmenelement wenigstens eine hintere Fahrradaufhängung. Das vordere und das hintere Rahmenelement sind mit wenigstens zwei drehbeweglichen Verbindungseinrichtungen verbunden,
wobei erfindungsgemäß wenigstens eine erste Verbindungseinrichtung mit einer Dämpfungseinrichtung und über wenigstens eine Kupplungseinrichtung mit wenigstens einer zweiten Verbindungseinrichtung verbunden ist.

Unter einem Rahmenelement wird ein Teil des Rahmens verstanden, der zusammen mit wenigstens einem weiteren Rahmenelement den gesamten des Fahrrads bildet.

Unter einer Verbindungseinrichtung wird ein Bauteil verstanden, welches wenigstens zwei weitere Einrichtungen miteinander verbindet. Dabei kann die Verbindungseinrichtung selbst ein starrer Körper sein. Unter einer drehbeweglichen Verbindungseinrichtung wird verstanden, dass sich die Verbindungseinrichtung gegenüber einem Bezugspunkt - wie insbesondere, aber nicht ausschließlich - einem Bezugspunkt einer der zu verbindenden Einrichtungen, drehen kann. Ferner kann die drehbare Verbindungseinrichtung auch so ausgestaltet sein, dass sie sich gegenüber beiden oder mehreren durch sie verbundenen Einrichtungen drehen kann.

Bevorzugt bewirkt die drehbare Verbindungseinrichtung, dass sich die durch diese Verbindungseinrichtung verbundenen Einrichtungen bezüglich einander drehen können.

Unter einer Dämpfungseinrichtung wird eine Einrichtung verstanden, welche Bewegungen - wie insbesondere, aber nicht ausschließlich Stöße - dämpft.

Unter einer Kopplungseinrichtung wird eine Einrichtung verstanden, welche wenigstens zwei weitere Elemente miteinander derart verbindet bzw. koppelt, dass die Bewegung der gekoppelten Elemente wenigstens teilweise korreliert. Bevorzugt gewährleistet die Kupplungseinrichtung, dass der Abstand zwischen den beiden durch diese Kupplungseinrichtung gekoppelten Einrichtungen an dem jeweiligen Verbindungspunkt mit der Kupplungseinrichtung konstant bleibt; auf diese Weise wird eine Bewegung der ersten gekoppelten Einrichtung wenigstens teilweise auf die zweite gekoppelte Einrichtung übertragen.

Durch die Verwendung der Kopplungseinrichtung kann diejenige Kompression der Dämpfungseinrichtung neutralisiert werden, die durch das Treten erfolgt, da die Kompressionskraft eine Drehkraft auf der ersten Verbindungseinrichtung erzeugt, welche über die Kopplungseinrichtung auf die zweite Verbindungseinrichtung übertragen wird. Auf diese Weise kann ein Anfahrnickausgleich bewerkstelligt werden, wobei gleichzeitig der Abstand des Schwenkpunktes der ersten Verbindungseinrichtung bezüglich der Kette im wesentlichen konstant gehalten wird.

In einer weiteren bevorzugten Ausführungsform ist die erste Verbindungseinrichtung über einen ersten Anlenkpunkt mit einer im wesentlichen vertikalen Strebe des vorderen Rahmenelements, vorzugsweise der Sattelstrebe, über einen zweiten Anlenkpunkt mit der Dämpfungseinrichtung und über einen dritten Anlenkpunkt mit der Hinterradstrebe des hinteren Rahmenelements verbunden. Durch diese Art der Verbindung kann die gedämpfte Bewegung der Rahmenelemente bezüglich einander in besonders vorteilhafter Weise gewährleistet werden.

In einer weiteren bevorzugten Ausführungsform ist die zweite Verbindungseinrichtung über einen vierten Anlenkpunkt mit dem Tretlager des vorderen Rahmenelements und über einen fünften Anlenkpunkt mit der Kettenradstrebe des hinteren Rahmenelements verbunden. Dabei weisen der vierte und der fünfte Anlenkpunkt einen vorgegebenen Abstand zueinander auf. Unter einem Anlenkpunkt wird derjenige geometrische Ort verstanden, an dem die angelenkten Elemente verbunden sind und bevorzugt der Ort, um den sich die jeweils angelenkten Einrichtungen bewegen, und besonders bevorzugt drehen.

Bei einer weiteren bevorzugten Ausführungsform ist das wenigstens eine Kupplungseinrichtung drehbeweglich mit wenigstens einer Verbindungseinrichtung verbunden. Bevorzugt ist die Kupplungseinrichtung mit beiden Verbindungseinrichtungen drehbeweglich verbunden. Bevorzugt ist die Kupplungseinrichtung mit dem zweiten Verbindungseinrichtung an dem dritten Anlenkpunkt oder im Bereich des dritten Anlenkpunktes verbunden. Auf diese Weise sind an dem dritten Anlenkpunkt sowohl das hintere Rahmenelement als auch die zweite Verbindungseinrichtung als auch die Kupplungseinrichtung drehbeweglich angeordnet. Durch die drehbewegliche Anordnung der Kupplungseinrichtung bezüglich der beiden Verbindungseinrichtungen wird gewährleistet, dass die Verbindungseinrichtungen zwar ihre geometrische Lage bezüglich einander, insbesondere ihre Winkelstellung, verändern können, jedoch an den jeweiligen Verbindungspunkten mit der Kupplungseinrichtung der Abstand im wesentlichen konstant bleibt.

In einer weiteren bevorzugten Ausführungsform ist wenigstens einer der Anlenkpunkte der Verbindungseinrichtungen drehbeweglich ausgeführt. Bevorzugt sind mehrere, besonders bevorzugt alle Anlenkpunkte beider Verbindungseinrichtungen drehbeweglich ausgeführt. Auf diese Weise kann insbesondere bei Verwendung der Kopplungseinrichtung im Falle von auf das Fahrrad wirkenden Stößen eine genau definierte Bewegung des Hinterrades gegenüber bevorzugten Bezugspunkten, wie beispielsweise der Sattelstrebe, erreicht werden.

Gemäß der vorliegenden erfindung sind die Anlenkpunkte der Dämpfungseinrichtung, der Hinterradstrebe und der Kupplungseinrichtung in einem vorgegebenen Abstand zueinander an der ersten Verbindungseinrichtung angeordnet. Durch dieses Abstand kann insbesondere, aber nicht ausschließlich, der Dämpfungsweg und damit die Dämpfungswirkung reguliert werden.

In einer weiteren bevorzugten Ausführungsform nimmt die Dämpfungseinrichtung eine im wesentlichen vertikale Grundausrichtung ein und ist vorzugsweise im Bereich zwischen dem Unterrohr, dem Sattelrohr und dem Oberrohr angeordnet. Dies bedeutet, das die Dämpfungseinrichtung im wesentlichen in Richtung der auf das Fahrrad wirkenden Gewichtskraft komprimiert wird.

In einer weiteren bevorzugten Ausführungsform ist die Dämpfungseinrichtung drehbeweglich mit dem Rahmen und der Verbindungseinrichtung verbunden. Durch diese drehbewegliche Anordnung wird gewährleisten, dass eine Dämpfungswirkung auch dann erreicht wird, wenn die Dämpfungsrichtung nicht exakt in der Richtung der Gewichtskraft angeordnet ist, bzw. dass eine Dämpfungswirkung entlang des gesamten Bewegungspfads des Hinterrads gegenüber dem vorderen Rahmenelement im wesentlichen konstant bleibt.

In einer weiteren bevorzugten Ausführungsform erfolgt die Anlenkung des zweiten Verbindungseinrichtung an der im wesentlichen vertikalen Strebe des vorderen Rahmenelements, vorzugsweise innerhalb eines Dreiecks, welches durch die Anlenkpunkte der Dämpfungseinrichtung, der Kupplungseinrichtung und des hinteren Fahrradrahmens aufgespannt wird. Durch diese Anordnung innerhalb des Dreiecks kann eine besonders günstige Kräfteverteilung bei der Dämpfung erreicht werden.

In einer weiteren bevorzugten Ausführungsform ist die Dämpfungseinrichtung aus einer Gruppe von Dämpfern ausgewählt, welche Federn, Luftdruckdämpfer, hydraulische Dämpfer, Gummidämpfer, Zug- und/oder Druckstufendämpfer, Kombinationen hieraus und dergleichen enthält.

Die Erfindung ist ferner auf die Verwendung einer Dämpfungseinrichtung für ein Fahrrad gerichtet, die wenigstens eine Kupplungseinrichtung und wenigstens eine erste und zweite Verbindungseinrichtung aufweist, wobei die beiden Verbindungseinrichtungen drehbeweglich mit wenigstens einem Fahrradrahmen und/oder Fahrradrahmenelement und wenigstens einer Kupplungseinrichtung verbunden sind. Dies bedeutet, dass die erfindungsgemäße Dämpfungseinrichtung unter Verwendung der Kupplungseinrichtung auch nachträglich bei Fahrrädern nachgerüstet werden kann und damit auch als Bausatz zur Verfügung gestellt werden kann.
Die vorliegende Erfindung ist ferner auf ein Verfahren zur Reduzierung der durch die Tretkraft eines Fahrers eines Fahrrads erzeugten Dämpferkompression gerichtet. Bei diesem Verfahren wird die wirksame Kettenlänge zwischen dem Antrieb und dem Abtrieb mittels eines Dämpfungsgetriebes bewirkt, welches wenigstens eine Kopplungseinrichtung und wenigstens eine erste und zweite Verbindungseinrichtung aufweist, welche vorzugsweise drehbeweglich mit wenigstens einem Rahmenelement und dem wenigstens einer Kupplungseinrichtung verbunden sind, konstant gehalten wird.

Unter einem Dämpfungsgetriebe wird jedwede Anordnung verstanden, welche geeignet ist, Kraft und/oder Bewegungen zu übertragen, wobei wenigstens teilweise auch eine Dämpfung der Kräfte oder Bewegungen eintritt. Bevorzugt bewirkt das Dämpfungsgetrtebe auch wenigstens teilweise eine Umlenkung der Kräfte bzw. Bewegungen.

Weitere Vorteile und Ausführungsformen der vorliegenden Erfindung ergeben sich aus den beigefügten Zeichnungen. Darin zeigen:
- Fig. 1: eine Seitenansicht der erfindungsgemäßen Rahmeneinrichtung;
- Fig. 2: eine perspektivische Darstellung der erfindungsgemäßen Rahmeneinrichtung; und
- Fig. 3.: eine Darstellung der von Fig. 2 unter Berücksichtigung der wirkenden Kräfte zur Veranschaulichung.

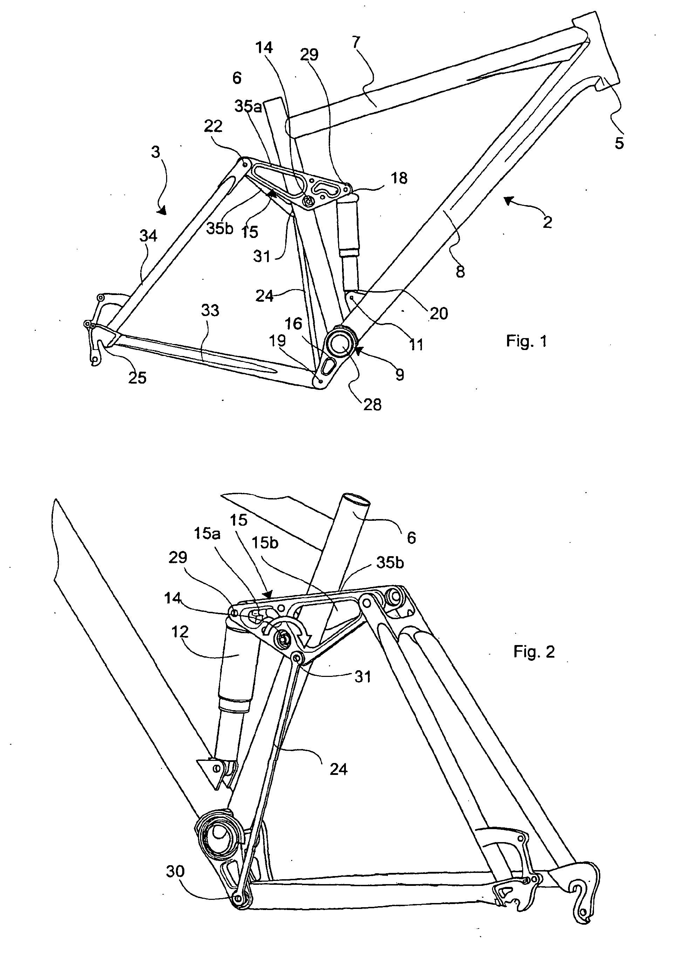

In Fig. 1 bezieht sich das Bezugszeichen 2 auf ein vorderes Rahmenelement und das Bezugszeichen 3 auf ein hinteres Rahmenelement. Das vordere Rahmenelement 2 weist ein Aufnahmerohr 5 für eine Lenkstange (nicht gezeigt) auf sowie ein Sattelrohr 6 auf.

Das vordere Rahmenelement setzt sich damit aus dem Sattelrohr 6, einer oberen Querstrebe 7, einer unteren Schrägstrebe 8 sowie dem Aufnahmerohr 5 zusammen. Diese Streben und das Sattelrohr sind miteinander fest verbunden. Dabei wird zwischen dem Sattelrohr 6 und der oberen Querstrebe 7 in dieser Ausführungsform ein Winkel im Bereich von 90° gewählt. Im Bereich der Verbindung zwischen dem Sattelrohr 6 und der Schrägstrebe 8 ist das Tretlager 9 angeordnet. Ebenso ist in diesem Bereich, genauer gesagt, bevorzugt an der gleichen Stelle der vierte Anlenkpunkt 28 zwischen dem vorderen Rahmenelement 2 und der zweiten Verbindungseinrichtung 16 vorgesehen.

Das Bezugszeichen 19 kennzeichnet den fünften Anlenkpunkt zwischen der zweiten Verbindungseinrichtung 16 und der Hinterradstrebe 33. In dieser Ausführungsform ist auch die Kopplungseinrichtung 24 an dem fünften Anlenkpunkt 19 angeordnet. Auf diese Weise kann eine drehbare Verbindung eingespart werden. Es ist jedoch auch möglich, die Kopplungseinrichtung 24 an anderen Punkten der zweiten Verbindungseinrichtung 16 oder Punkten an der Hinterradstrebe 33 vorzusehen.

Das Bezugszeichen 15 bezieht sich auf die erste Verbindungseinrichtung. Diese weist in dieser Ausführungsform einen ersten Anlenkpunkt 14 auf, mit welchem die erste Verbindungseinrichtung drehbeweglich gegenüber dem Sattlerohr 6 angeordnet ist. Über einen zweiten Anlenkpunkt 29 ist die erste Verbindungseinrichtung 15 mit einer Dämpfungseinrichtung 12, genauer gesagt mit dem oberen Bereich 18, der Dämpfungseinrichtung 12 verbunden. Der untere Bereich 20 der Dämpfungseinrichtung 12 ist über eine Verbindungseinrichtung 11 mit dem unteren Schrägrohr 8 verbunden. Auch diese untere Verbindungseinrichtung 11 erlaubt eine drehbare Verbindung zwischen der Dämpfungseinrichtung 12 und der unteren Schrägstrebe 8. Die untere Verbindungseinrichtung könnte alternativ auch am Sattelrohr 6 vorgesehen sein.

Das Bezugszeichen 22 kennzeichnet den dritten Anlenkpunkt, mit welchem die hintere Schrägstrebe 34 und die erste Verbindungseinrichtung 15 verbunden werden. Das Bezugszeichen 31 bezieht sich auf den (in Fig. 1 nur teilweise sichtbaren) oberen Verbindungspunkt der Kopplungseinrichtung 24, mit welchem die Kopplungseinrichtung und die erste Verbindungseinrichtung 15 verbunden sind.

Wie in Fig. 1 erkennbar, weist die erste Verbindungseinrichtung 15 zwei im wesentlichen dreiecksförmige Scheiben bzw. Teileinheiten 35a und 35b auf. Diese Teileinheiten 35a, 35b stimmen in der gezeigten Ausführungsform hinsichtlich der Längsseite, welche die Auslenkpunkte 22 und 18 verbindet, überein. Allerdings weist die in Fig. 1 gezeigte hintere Scheibe 35b einen bezüglich der vorderen Scheibe 35a tiefer liegenden dritten Eckpunkt auf, an dem die Kopplungseinrichtung 24 angeordnet ist.

Es wäre auch möglich, beide Scheiben 35a, 35b der Verbindungseinrichtung im wesentlichen gleich zu gestalten, wobei bevorzugt auch zwei Kopplungseinrichtungen verwendet werden könnten.

Die Hinterradstrebe 33 ist mit der hinteren Schrägstrebe 34 an einem hinteren Verbindungspunkt der Hinterradstrebe verbunden. Bevorzugt handelt es sich dabei ebenfalls um eine drehbare Verbindung. In einer weiteren Ausführungsform weist die Aufnahmeeinrichtung für die Hinterradnabe 25 zwei Gelenkpunkte (nicht gezeigt) auf, welche jeweils mit der Hinterradstrebe 33 und der hinteren Schrägstrebe 34 verbunden sind, um auf diese Weise schwenkbare Verbindung zwischen der Hinterradstrebe 33 und der hinteren Schrägstrebe 34 zu erreichen.

In einer weiteren bevorzugten Ausführungsform kann jedoch die Verbindung zwischen der Hinterradstrebe 33 und der hinteren Schrägstrebe 34 auch starr ausgeführt sein.

Wie Fig. 1 zeigt, handelt es sich bei der erfindungsgemäßen Anordnung um eine Sechsstangen-Verbindungsanordnung zwischen der Hinterradstrebe 33, der hinteren Schrägstrebe 34, dem Sattelrohr 6, der Kopplungseinrichtung 24, der Dämpfurigseinrichtung 12 und der ersten Verbindungseinrichtung 15. Diese Anordnung erlaubt, wie oben eingeführt, die Belegung des Hinterrades derart zu steuern, dass ein Pedalrückschlag vermieden werden kann.

Beim Stand der Technik wurden bislang Vierstangen-Anordnungen gewählt, welche noch keine Kopplungseinrichtung 24 aufwiesen. Auch in der erfindungsgemäßen Sechsstangen-Verbindungskonstruktion ergibt sich ein Bewegungspfad des Hinterrades, der im wesentlichen senkrecht zur Kette verläuft. Dabei wird ein Bogen über das Tretlager gebildet, um Veränderungen der Kettelänge zu vermeiden und um auf diese Weise einen Pedalrückschlag zu verhindern.

Während jedoch eine Vierstangen-Verbindung keine Einrichtung aufweist, um den Gewichtstransferkräften entgegen zu wirken, überträgt die erfindungsgemäße Vorrichtung mittels der Kopplungseinrichtung 24 Drehmomente, die in der zweiten Verbindungseinrichtung 16 (durch die Beschleunigung des Hinterrades in Richtung des Rahmens) erzeugt werden, auf die erste Verbindungseinrichtung 15. An der ersten Verbindungseinrichtung wirkt dieses Drehmoment entgegen den Gewichtstransferkräften. Da die Beschleunigung, die einen Gewichtsübertrag verursacht, auch den Antinickausgleich erzeugt, werden diese Kräfte immer gleich und entgegengesetzt sein. Da die antriebserzeugten Kräfte beseitigt sind, kann die Dämpfung einfach Stöße abfangen, ohne dass die Dämpfungseinrichtung durch das Antreten belastet wird.

Dieses System kann auch unabhängig von der Position des Rads während seines Weges arbeiten, unabhängig von der Gangauswahl und unabhängig von der Geschwindigkeit der Stöße. Im Ergebnis führt dies zu ständig weich gefedertem Fahren, und es bewirkt, dass man auch durch Straßenunebenheiten nicht abgebremst wird.

In einer bevorzugten Ausführungsform kann ein Federungsweg des hinteren Rades von 180 mm erreicht werden, wenn ein 9,5 x 3,0" Stoßdämpfer verwendet wird.

Das vordere Rahmenelement weist bevorzugt ein stumpfgestoßenes Aluminiumdreieck auf, mit hydrogeformten Rohren, was zu hervorragendem Steife/Gewicht-Verhältnis führt, sowie ferner eine voll höhenverstellbare Sitzstellung.

In einer weiteren bevorzugten Ausführungsform werden ferner die Sattel- und Kettenstützanordnungen aus selbsttragenden elastischen Karbonfasem durch zusätzliche Kevlarschichten verstärkt, um die besonders hohen Belastungen bei der Benutzung als Mountainbike zu tragen.

Bevorzugt werden ferner an wenigstens einem Anlenkpunkt abgedichtete Hülsenlager verwendet. Weiterhin finden geschmiedete Verbindungseinrichtungen und Rahmengelenkstehbolzen Anwendung.

Das Gewicht im Falle eines 17,5" Rahmens des Fahrrades liegt zwischen 2,2 und 4,0 kg, bevorzugt zwischen 2,5 und 3,3 kg, und besonders bevorzugt im Bereich von 2,8 kg. Die Rahmen werden bevorzugt in Größen von 13,5", 17,5" und 19,5" ausgeführt.

Eine weitere Ausführungsform gewährleistet, dass das hintere Rad einen Dämpfungsweg von 120 mm aufweist, wobei ein 7,5 x 2"-Dämpfer verwendet wird. Dabei bietet ein stumpfgestoßenes vorderes Rahmenelement in Form eines Dreiecks Leichtgewichtigkeit, ein Höchstmaß an Steife und die Möglichkeit einer vollen Sitzhöheneinstellung, klassisches Aussehen und die Möglichkeit einer herkömmlichen Anordnung für die Wasserflasche.

Bei dieser Ausführungsform wird eine selbsttragende Ketten- und/oder Sitzstützvorrichtung aus elastischen Kohlenstofffasem mit seitlicher Steife vorgesehen, die gleichzeitig Flexibilität aufweist, um eine Dämpfung mit einer Sechsstangen-Verbindungsdämpfung zu gewährleisten. Auch hier werden abgedichtete Hülsenlager an allen Gelenkpunkten sowie geschmiedete Verbindungseinrichtungen und Rahmengelenkstehbolzen vorgesehen.

Das Gewicht in dieser Ausführungsform liegt im Falle eines 17,5"-Rahmens im Bereich von 1,8 kg und 4 kg, bevorzugt im Bereich von 2,2 kg und 2,6 kg und besonders bevorzugt Bereich von 2 kg. Bei dieser Ausführungsform ist es vorgesehen, Rahmen mit Größen von 13,5", 17,5", 19,5" und 21,5" zur Verfügung zu stellen.

Fig. 2 zeigt eine perspektivische Teildarstellung der erfindungsgemäßen Rahmeneinrichtung. Man erkennt, dass die erste Verbindungseinrichtung 15 in dieser Ausführungsform eine im wesentlichen dreiecksförmige Gestalt aufweist. Daneben weist die Verbindungseinrichtung Aussparungen 15a und 15b auf, was den Vorteil einer weiteren Gewichtsreduzierung mit sich bringt.

An dem oberen Verbindungspunkt 31 der Kopplungseinrichtung 24 ist die Verbindungseinrichtung 15 angeordnet. Bei dieser Ausführungsform fällt der obere Verbindungspunkt 31 im wesentlichen mit der unteren Ecke der dreiecksförmigen ersten Verbindungseinrichtung 15 bzw. der Scheibe 35b zusammen. Es ist jedoch auch möglich, den oberen Verbindungspunkt der Kopplungseinrichtung an einer anderen Stelle der Verbindungseinrichtung vorzusehen, solange dieser Punkt nicht mit dem ersten Anlenkpunkt 14 zusammenfällt. Auch ist es bevorzugt, wie unten erläutert wird, den oberen Verbindungspunkt der Kopplungseinrichtung Fig. 2 rechts bezüglich des ersten Anlenkpunkts 14 anzuordnen oder allgemein gesprochen, bezüglich des ersten Anlenkpunkts 14 auf der gegenüberliegenden Seite im Vergleich zu dem zweiten Anlenkpunkt 29, an welchem die Dämpfungseinrichtung 12 angeordnet ist.

Der untere Verbindungspunkt 30 der Kopplungseinrichtung fällt in dieser Ausführungsform mit dem fünften Anlenkpunkt 19, das heißt, dem Anlenkpunkt zwischen der zweiten Verbindungseinrichtung 16 und der Hinterradstrebe 33 zusammen. Dies bringt den Vorteil, dass ein weiteres Gelenk bzw. eine gelenkige Verbindung eingespart werden kann. Es wäre jedoch auch möglich, den unteren Verbindungspunkt der Kopplungseinrichtung 30 an abweichenden Stellen wie beispielsweise im Bereich der Hinterradstrebe 33 oder im Bereich der unteren Schrägstrebe 8 vorzusehen.

Über die einzelnen Abstände der Anlenkpunkte 22, 29 und 14 bzw. auch über das Verhältnis des Abstandes des dritten Anlenkpunkts 22 zum ersten Anlenkpunkt 14 bezüglich des Verhältnisses des Abstands zwischen dem zweiten Anlenkpunkt 29 und dem ersten Anlenkpunkt 14 kann die Dämpfungshöhe, das heißt, die Strecke, um die das Hinterrad im Rahmen der Dämpfung gegenüber dem vorderen Rahmenelement bewegt werden kann, kontrolliert werden.

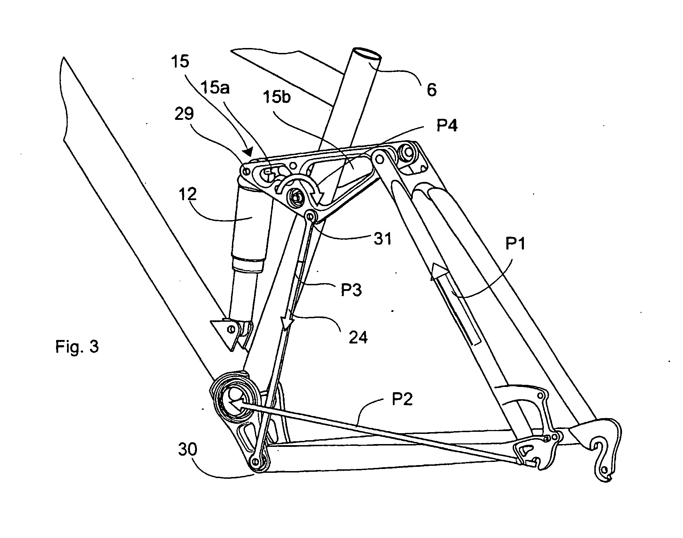

Fig. 3 zeigt die Abbildung aus Fig. 2, wobei zur Verdeutlichung der Erfindung die auf den Rahmen im einzelnen wirkenden Kräfte veranschaulicht sind.

Bei herkömmlichen Fahrradrahmen, welche nicht die Kopplungseinrichtung 24 aufweisen, wird beim Antritt des Fahrrades zunächst auf das Tretlager eine Kraft im wesentlichen nach unten ausgewirkt. Dies bewirkt, dass sich das (nicht gezeigte) Hinterrad gegenüber dem vorderen Rahmenelement nach oben bewegt und auf diese Weise entlang der hinteren Schrägstrebe eine Kraft in Richtung des Sattelrohrs (entlang des Pfeils P1) erzeugt. Diese Druckkraft bewirkt eine Drehkraft an der ersten Verbindungseinrichtung 15 entgegen dem Uhrzeigersinn. Diese Drehkraft wirkt auf die Dämpfungseinrichtung 12, so dass letztlich die erhöhte Belastung auf das Hinterrad eine Kompression der Dämpfungseinrichtung bewirkt. Dieser Effekt führt zum oben beschriebenen Anfahmicken, oder mit anderen Worten, bewirkt eine Beschleunigung, durch die das Gewicht des Fahrers über das Hinterrad auf die Dämpfungseinrichtung übertragen und diese damit komprimiert wird.

Bei der erfindungsgemäßen Rahmenvorrichtung bewirkt die Tretkraft, dass die Kopplungseinrichtung 24 nach unten gezogen wird, wobei die Kettenlänge im wesentlichen unbeeinflusst bleibt. Die Kopplungseinrichtung 24 zieht ihrerseits die erste Verbindungseinrichtung 15 entlang des Pfeils P3 am oberen Verbindungspunkt der Kopplungseinrichtung 24 nach unten, wodurch eine Drehung der ersten Verbindungseinrichtung 15 in Richtung des Pfeils P4 bewirkt wird und die mit dem zweiten Anlenkpunkt 29 verbundene Dämpfungseinrichtung 12 expandiert wird.

Diese Zugkraft der Kopplungseinrichtung 24 gleicht die oben beschriebene normale Anfahrnickkraft aus. Auf diese Weise wird eine feste Grundlage zum Treten geschaffen, wobei kein Verlust an Geschmeidigkeit durch die Dämpfung auftritt.

Die Gewichtsübertragung wird tatsächlich dadurch verursacht, dass das Rad unter dem Schwerpunkt des Fahrers während einer Beschleunigung des Rades durch Treten belastet wird.

Die vorliegende Erfindung kann gleichermaßen bzw. gleichermaßen effizient auf Räder mit kurzem Dämpfungsweg und Räder mit langem Dämpfungsweg angewandt werden. Daneben wird eine aufwendige Justage der Vorrichtung unnötig. Es wird, wie erwähnt, ein Fahrrad zur Verfügung gestellt, welches effizient durch Treten beschleunigt werden kann und welches effektiv verzögernde Effekte beispielsweise durch Unebenheiten der Straße reduzieren kann.

Ferner wird ein Dämpfungssystem zur Verfügung gestellt, welches im wesentlichen keine Veränderungen der Kettenlänge aufweist und auf diese Weise den Pedalrückschlag verhindert. Es kann damit den Effekten nach dem Stand der Technik entgegengewirkt werden, wonach eine stabile Sitzdämpfung die Geschmeidigkeit der Federung reduziert. Ferner kann der erfindungsgemäße Rahmen an die geforderten Anwendungen angepasst werden, wie beispielsweise an das Fahren über längere Strecken auf relativ ebener Straße oder an das Fahren auf sehr unwegsamem Gelände.

## Patentansprüche

1. Fahrrad mit einem Rahmen, der wenigstens ein vorderes (2) und ein hinteres (3) Rahmenelement aufweist,
wobei das vordere Rahmenelement (2) wenigstens eine vordere Fahrradaufhängung (5) und wenigstens ein Tretlager (9) und das hintere Rahmenelement wenigstens eine hintere Fahrradaufhängung (25) aufweist, und
das vordere (2) und das hintere (3) Rahmenelement mit wenigstens einer ersten drehbeweglichen Verbindungseinrichtungen (15) und einer zweiten drehbeweglichen Verbindungseinrichtung (16) verbunden sind,
wobei die wenigstens eine erste Verbindungseinrichtung (15) über einen ersten Anlenkpunkt mit dem vorderen Rahmenelement, über einen zweiten Anlenkpunkt (29) mit einer Dämpfungseinrichtung (12) und über einen dritten Anlenkpunkt (22) mit einer hinteren Schrägstrebe (34) des hinteren Rahmenelementes (3) verbunden ist und wobei die wenigstens eine erste Verbindungseinrichtung (15) über wenigstens eine Kopplungseinrichtung (24) mit der wenigstens einen zweiten Verbindungseinchtung (16) verbunden ist,
**dadurch gekennzeichnet, dass** der zweite Anlenkpunkt (29) der Dämpfungseinrichtung, der dritte Anlenkpunkt (22) der hinteren Schrägstrebe und ein Anlenkpunkt (31) der Kopplungseinrichtung in einem vorgegebenen Abstand zueinander an der wenigstens einen ersten Verbindungseinrichtung (15) angeordnet sind.

2. Fahrrad gemäß Anspruch 1,
**dadurch gekennzeichnet, dass**
die erste Verbindungseinrichtung (15) über den ersten Anlenkpunkt (14) mit einer im wesentlichen vertikalen Strebe des vorderen Rahmenelements, vorzugsweise der Sattelstrebe (6) verbunden ist.

3. Fahrrad gemäß wenigstens einem der vorstehenden Ansprüche,
**dadurch gekennzeichnet, dass**
die zweite Verbindungseinrichtung über einen vierten Anlenkpunkt (28) mit dem Tretlager (9) des vorderen Rahmenelements (2) und über einen fünften Anlenkpunkt (19) mit der Hinterradstrebe (33) des hinteren Rahmenelements verbunden ist.

4. Fahrrad gemäß wenigstens einem der vorstehenden Ansprüche,
**dadurch gekennzeichnet, dass**
das wenigstens eine Kopplungseinrichtung (24) mit wenigstens einer Verbindungseinrichtung (15, 16) drehbeweglich verbunden ist.

5. Fahrrad gemäß wenigstens einem der vorstehenden Ansprüche,
**dadurch gekennzeichnet, dass**
wenigstens ein Anlenkpunkt (14, 19, 22, 28, 29) der Verbindungseinrichtungen drehbeweglich ausgeführt ist.

6. Fahrrad gemäß wenigstens einem der vorstehenden Ansprüche,
**dadurch gekennzeichnet, dass**
die Dämpfungseinrichtung (12) eine im wesentlichen vertikale Grundausrichtung einnimmt und vorzugsweise im Bereich zwischen der unteren Schrägstrebe (8), dem Sattelrohr (6) und der oberen Querstrebe (7) angeordnet ist.

7. Fahrrad gemäß wenigstens einem der vorstehenden Ansprüche,
**dadurch gekennzeichnet, dass**
die Dämpfungseinrichtung (12) drehbeweglich mit dem vorderen Rahmenelement (2) und der ersten Verbindungseinrichtung (15) verbunden ist.

8. Fahrrad gemäß wenigstens einem der vorstehenden Ansprüche,
**dadurch gekennzeichnet, dass**
die Anlenkung der zweiten Verbindungseinrichtung (16) an der im wesentlichen vertikalen Strebe (6) des vorderen Rahmenelements (2) vorzugsweise innerhalb des Dreiecks erfolgt, welches durch die Anlenkpunkte der Dämpfungseinrichtung (12), des Kopplungselements (24) und des hinteren Rahmenelements (3) aufgespannt wird.

9. Fahrrad gemäß wenigstens einem der vorstehenden Ansprüche,
**dadurch gekennzeichnet, dass**
die Dämpfungseinrichtung (12) aus einer Gruppe von Dämpfern ausgewählt ist, welche Federn, Luftdruckdämpfer, hydraulische Dämpfer, Gummidämpfer, Zug- und/oder Druckstufendämpfer, Kombinationen hieraus und dergleichen aufweist.

10. Verwendung einer Dämpfungseinrichtung (12) mit wenigstens einer Kopplungseinrichtung (24) und wenigstens einer ersten (15) und einer zweiten (16) Verbindungseinrichtung für ein Fahrrad gemäß eines der vorstehenden Ansprüche, wobei die wenigstens zwei Verbindungseinrichtungen (15, 16) vorzugsweise drehbeweglich mit wenigstens einem Rahmenelement (2, 3) und der wenigstens einen Kopplungseinrichtung (24) verbunden sind.

11. Verfahren zur Reduzierung der durch die Tretkraft des Fahrers erzeugten Dämpferkompression, bei einem Fahrrad gemäß einem der vorstehenden Ansprüche 1 bis 9,
**dadurch gekennzeichnet, dass**
die wirksame Kettenlänge zwischen dem Antrieb und dem Abtrieb mittels eines Dämpfungsgetriebes, welches wenigstens eine Kopplungseinrichtung (24) und wenigstens eine erste (15) und eine zweite (16) Verbindungseinrichtung aufweist, welche vorzugsweise drehbeweglich mit wenigstens einem Rahmenelement (2, 3) und der wenigstens einem Kopplungseinrichtung verbunden sind, im wesentlichen konstant gehalten wird.

## Claims

1. Bicycle with a frame, comprising at least a fore (2) and a rear (3) frame element, whereas the fore frame element (2) has at least a fore bicycle mounting (5) and at least a bottom bracket (9) and the rear frame element has at least a rear bicycle mounting (25), and
the fore (2) and the rear frame element (3) are coupled with at least a first pivotable connecting attachment (15) and a second pivotable connecting attachment (16), whereas the at least one first connecting attachment (15) is coupled with the fore frame element through a first coupling point (14), with an absorbing attachment (12) through a second coupling point (29) and with a rear slant stay (34) of the rear frame element (3) through a third coupling point (22), and
whereas the at least one first connecting attachment (15) is coupled with the at least one second connecting attachment (16) through at least one coupling attachment (24),
**characterised in that**
the second coupling point (29) of the absorbing attachment, the third coupling point (22) of the rear slant stay and a coupling point (31) of the coupling attachment are arranged at the at least one first connecting attachment (15) with a given distance to each other.

2. Bicycle according to claim 1, **characterised in that**
the first connecting attachment (15) is coupled with a basically vertical stay of the fore frame element, preferably with the seat tube (6), through the first coupling point (14).

3. Bicycle according to at least one of the preceding claims, **characterised in that**
the second connecting attachment is coupled with the bottom bracket (9) of the fore frame element (2) through a fourth coupling point (28) and with the chain stay (33) of the rear frame element through a fifth coupling point (19).

4. Bicycle according to at least one of the preceding claims, **characterised in that**
at least one coupling attachment (24) is coupled pivotably with at least one connecting attachment (15, 16).

5. Bicycle according to at least one of the preceding claims, **characterised in that**
at least one coupling point (14, 19, 22, 28, 29) of the connecting attachments is designed to be pivotable.

6. Bicycle according to at least one of the preceding claims, **characterised in that** the absorbing attachment (12) basically adopts a vertical orientation and is preferably arranged in the region between the down tube (8), the seat tube (6) and the top tube (7).

7. Bicycle according to at least one of the preceding claims, **characterised in that** the absorbing attachment (12) is coupled pivotably with the fore frame element (2) and with the first connecting attachment (15).

8. Bicycle according to at least one of the preceding claims, **characterised in that** the linkage of the second connecting attachment (16) at the basically vertical seat tube (6) of the fore frame element (2) occurs preferably within the triangle, which is defined by the coupling points of the absorbing attachment (12), the coupling attachment (24) and the rear frame element (3).

9. Bicycle according to at least one of the preceding claims, **characterised in that** the absorbing attachment (12) is chosen from a group of absorbers comprising springs, compressed air absorbers, hydraulic absorbers, rubber absorbers, absorbers with compression stroke and/or expansion stroke mechanism, combinations herefrom and the like.

10. Use of an absorbing attachment (12) with at least one coupling attachment (24) and at least one first (15) and one second (16) connecting attachment for a bicycle according to one of the preceding claims, whereas the at least two connecting attachments (15, 16) are coupled pivotably with at least one frame element (2, 3) and the at least one coupling attachment (24), preferably.

11. A method to reduce the compression of an absorber of a bicycle according to one of the preceding claims 1 to 9 caused by the pedalling force of the rider, **characterised in that**
the functional length of the chain between the driving member and the driven member is basically kept constant by means of a damping mechanism, which has at least one coupling attachment (24), one first (15) and one second (16) connecting attachment, all of which are pivotably coupled with at least one frame element (2, 3) and the at least one coupling attachment, preferably.

## Revendications

1. Bicyclette comprenant un cadre qui présente au moins un élément de cadre avant (2) et un élément de cadre arrière (3),
dans laquelle l'élément de cadre avant (2) comprend au moins un système de suspension de roue avant (5) et au moins un palier de pédalier (9), et l'élément de cadre arrière au moins un système de suspension de roue arrière (25), et
l'élément de cadre avant (2) et l'élément de cadre arrière (3) sont reliés par au moins un premier dispositif de liaison (15) mobile en rotation et un deuxième dispositif de liaison (16) mobile en rotation,
dans laquelle ledit au moins un premier dispositif de liaison (15) est relié, par l'intermédiaire d'un premier point d'articulation à l'élément de cadre avant, par l'intermédiaire d'un deuxième point d'articulation (29) à un dispositif d'amortissement (12), et par l'intermédiaire d'un troisième point d'articulation (22) à une barre oblique arrière ou hauban (34) de l'élément de cadre arrière (3), et
dans laquelle ledit au moins un premier dispositif de liaison (15) est relié par l'intermédiaire d'au moins un dispositif de couplage (24) au dit au moins un deuxième dispositif de liaison (16),
**caractérisée**
**en ce que** le deuxième point d'articulation (29) du dispositif d'amortissement, le troisième point d'articulation (22) de la barre oblique arrière ou hauban, et un point d'articulation (31) du dispositif de couplage, sont agencés selon une distance d'espacement prédéfinie les uns par rapport aux autres sur ledit au moins un premier dispositif de liaison (15).

2. Bicyclette selon la revendication 1,
**caractérisée en ce que** le premier dispositif de liaison (15) est relié, par l'intermédiaire du premier point d'articulation (14), à une barre sensiblement verticale de l'élément de cadre avant, de préférence le tube de réception de tige de selle (6).

3. Bicyclette selon l'une au moins des revendications précédentes,
**caractérisée en ce que** le deuxième dispositif de liaison est relié par l'intermédiaire d'un quatrième point d'articulation (28) au palier de pédalier (9) de l'élément de cadre avant (2), et par l'intermédiaire d'un cinquième point d'articulation (19) à la barre de roue arrière ou base (33) de l'élément de cadre arrière.

4. Bicyclette selon l'une au moins des revendications précédentes,
**caractérisée en ce qu'**au moins un dispositif de couplage (24) est relié de manière mobile en rotation à au moins un dispositif de liaison (15, 16).

5. Bicyclette selon l'une au moins des revendications précédentes,
**caractérisée en ce qu'**au moins un point d'articulation (14, 19, 22, 28, 29) des dispositifs de liaison est réalisé mobile en rotation.

6. Bicyclette selon l'une au moins des revendications précédentes,
**caractérisée en ce que** le dispositif d'amortissement (12) prend une orientation de base sensiblement verticale, et est agencé de préférence entre le tube diagonale (8) inférieur, le tube de réception de tige de selle (6) et la barre transversale supérieure (7).

7. Bicyclette selon l'une au moins des revendications précédentes,
**caractérisée en ce que** le dispositif d'amortissement (12) est relié de manière mobile en rotation à l'élément de cadre avant (2) et au premier dispositif de liaison (15) .

8. Bicyclette selon l'une au moins des revendications précédentes,
**caractérisée en ce que** l'articulation du deuxième dispositif de liaison (16) à la barre sensiblement verticale (6) de l'élément de cadre avant (2), s'effectue de préférence à l'intérieur d'un triangle qui est défini par les points d'articulation du dispositif d'amortissement (12), de l'élément de couplage (24) et de l'élément de cadre arrière (3).

9. Bicyclette selon l'une au moins des revendications précédentes,
**caractérisée en ce que** le dispositif d'amortissement (12) est choisi parmi un groupe d'amortisseurs, qui comprend des ressorts, des amortisseurs à air comprimé, des amortisseurs hydrauliques, des amortisseurs en caoutchouc, des amortisseurs à étage de traction et/ou de compression, des combinaisons de ces éléments ou analogues.

10. Utilisation d'un dispositif d'amortissement (12) avec au moins un dispositif de couplage (24) et au moins un premier (15) et un deuxième (16) dispositifs de liaison pour une bicyclette selon l'une des revendications précédentes, lesdits au moins deux dispositifs de liaison (15, 16) étant reliés de préférence de manière mobile en rotation, à au moins un élément de cadre (2, 3) et au dit au moins un élément de couplage (24).

11. Procédé pour réduire la compression d'amortisseur produite par la force de pédalage du conducteur d'une bicyclette selon l'une des revendications précédentes 1 à 9,
**caractérisé en ce que** la longueur utile de chaîne entre l'élément d'entraînement menant et l'élément mené est maintenue sensiblement constante au moyen d'un système de transmission à amortissement comprenant au moins un dispositif de couplage (24) et au moins un premier (15) et un deuxième (16) dispositifs de liaison, qui sont reliés de préférence de manière mobile en rotation, à au moins un élément de cadre (2, 3) et au dit au moins un dispositif de couplage.
